# EUROPÄISCHE PATENTSCHRIFT

(11) **EP 3 427 894 B1**
(45) Veröffentlichungstag und Bekanntmachung des Hinweises auf die Patenterteilung: **17.11.2021**
(21) Anmeldenummer: 17180519.5
(22) Anmeldetag: 10.07.2017
(51) Int. Cl.: B23Q 3/18

(54) **WERKSTÜCKZENTRIERVORRICHTUNG UND VERFAHREN ZUR ZENTRIERUNG EINES FINISHEND ZU BEARBEITENDEN WERKSTÜCKS**
WORKPIECE CENTRING DEVICE AND METHOD FOR CENTRING A WORK PIECE TO BE FINISHED
DISPOSITIF DE CENTRAGE DE PIÈCE ET PROCÉDÉ DE CENTRAGE D'UNE PIÈCE DESTINÉE AU FINISSAGE

(43) Veröffentlichungstag der Anmeldung: 16.01.2019
(73) Patentinhaber: Supfina Grieshaber GmbH & Co. KG, 77709 Wolfach (DE)
(72) Erfinder: RICHBER, Karl-Heinz, 77709 Wolfach (DE); STEPHAN, Marcus, 77716 Fischerbach (DE); WÖHRLE, Michael, 77793 Gutach (DE)
(74) Vertreter: DREISS Patentanwälte PartG mbB

(56) Entgegenhaltungen:
- EP-A2- 0 350 799
- JP-A- S61 152 353

## Beschreibung

Die Erfindung betrifft eine Werkstückzentriervorrichtung mit den Merkmalen des Oberbegriffs des Patentanspruchs 1, gemäß EP 0 350 799 A2.

Unter einer Finishbearbeitung wird eine abrasive Feinbearbeitung einer Werkstückoberfläche verstanden, bei welcher zwischen einem Werkstück und einem abrasiven Finishwerkzeug (bspw. einem Finishstein oder einem Finishband) zwei Relativbewegungen einander überlagert werden, nämlich eine Rotationsbewegung des Werkstücks um eine Rotationsachse und eine Relativbewegung zwischen Werkstück und Werkzeug in Form einer oszillierenden Hin- und Herbewegung in einer zu der Rotationsachse parallelen Richtung. Die Überlagerung der beiden genannten Bewegungen erzeugt eine für das Finishverfahren charakteristische Kreuzschliffstruktur auf der finishend bearbeiteten Werkstückoberfläche.

Es ist bekannt, finishend zu bearbeitende Werkstücke, beispielsweise Innen- oder Außenringe von Wälzlagern, mit einer finishend zu bearbeitenden Stirnfläche auf eine Auflagefläche aufzulegen und mittels werkstückspezifischen Zentrierhilfen relativ zu einer Rotationsachse der Werkstückauflagefläche auszurichten.

Aus der JP S61 152353 A ist eine weitere Zentriervorrichtung bekannt.

Hiervon ausgehend liegt der vorliegenden Erfindung die Aufgabe zugrunde, eine Werkstückzentriervorrichtung anzugeben, mit der die Zentrierung eines Werkstücks vereinfacht wird.

Diese Aufgabe wird bei einer Werkstückzentriervorrichtung der eingangs genannten Art erfindungsgemäß durch die kennzeichnenden Merkmale des Patentanspruchs 1 gelöst.

Die erfindungsgemäße Werkstückzentriervorrichtung ermöglicht eine automatisierte und zuverlässig wiederholbare Zentrierung eines Werkstücks. Werkstückspezifische Zentrierhilfen sind nicht erforderlich.

Erfindungsgemäß ist ein Positionierelement vorgesehen, das zur temporären Anlage an ein auf der Werkstückauflage aufgelegtes, zu zentrierendes Werkstück ausgebildet ist. Das Positionierelement ist längs einer Positionierachse mittels einer Antriebseinrichtung antreibbar. Dabei ist die Bewegung des Positionierelements längs der Positionierachse mittels einer Steuerungseinrichtung gesteuert.

Insbesondere ist das Positionierelement längs der Positionierachse stufenlos und kontinuierlich bewegbar, vorzugsweise mit einer Genauigkeit von +/- 1 pm. Für eine besonders genaue Steuerung der Bewegung des Positionierelements ist es bevorzugt, elektrische Linearantriebe als Antriebseinrichtung zu verwenden.

Während eines Kontakts des Positionierelements mit einer Oberfläche des zu zentrierenden Werkstücks üben die Werkstückoberfläche und das Positionierelement einander zugewandte Druckkräfte aufeinander aus. Durch die Vorgabe der Position des Positionierelements bewirken diese Druckkräfte eine Verschiebung des zu zentrierenden Werkstücks auf der Werkstückauflage und somit eine Zentrierung.

Eine besonders genaue Zentriermöglichkeit ergibt sich, wenn die Positionierachse bezogen auf die Rotationsachse in radialer Richtung verläuft. Hiervon abweichende Richtungen sind möglich, solange zumindest eine Komponente einer Richtung der Positionierachse bezogen auf die Rotationsachse in radialer Richtung verläuft.

Erfindungsgemäß ist das Positionierelement drehbar an einem Positionierelementhalter gelagert, wobei die Antriebseinrichtung den Positionierelementhalter antreibt. Dies ermöglicht es, das Positionierelement relativ zu dem Positionierelementhalter verdrehen zu können. Ein Kontakt des Positionierelements mit einer Werkstückoberfläche kann dann mit einer Drehung des Positionierelements einhergehen, sodass das Positionierelement auf der Werkstückoberfläche abwälzt. Hierdurch verringert sich eine zwischen dem Werkstück und dem Positionierelement auftretende Reibung.

Besonders bevorzugt ist es, wenn die Werkstückzentriervorrichtung eine Halteeinrichtung zur Fixierung des Werkstücks auf der Werkstückauflagefläche aufweist. Eine solche Halteeinrichtung ermöglicht die Fixierung insbesondere eines fertig zentrierten Werkstücks auf der Werkstückauflagefläche.

Es ist denkbar, dass die Halteeinrichtung ein Werkstück mittels Formschluss auf der Werkstückauflagefläche fixiert, beispielsweise durch Verwendung von Spannpratzen. Besonders bevorzugt ist es jedoch, wenn die Halteeinrichtung zur formschlussfreien Fixierung eines Werkstücks auf der Werkstückauflagefläche ausgebildet ist.

Eine besonders bevorzugte Halteeinrichtung ist durch eine magnetische Spanneinrichtung gebildet, mittels welcher das Werkstück reibschlüssig auf der Werkstückauflagefläche fixierbar ist. Dabei sind die zwischen der Spanneinrichtung und dem Werkstück wirkenden Haltekräfte durch Anpassung und Einstellung der Magnetkräfte einstellbar. Somit ist es möglich, während eines Zentriervorgangs geringere Haltekräfte auf das Werkstück ausüben zu lassen, sodass dieses im Zusammenwirken mit dem Positionierelement auf der Werkstückauflage verschiebbar ist. Nach Abschluss des Zentriervorgangs können die Haltekräfte erhöht werden, sodass das Werkstück zur finishenden Bearbeitung gegen eine Verschiebung gesichert auf der Werkstückauflagefläche fixiert werden kann.

Erfindungsgemäß ist mindestens eine Erfassungseinrichtung zur zumindest mittelbaren Erfassung einer Rundheitsabweichung einer Umfangsfläche eines auf der Werkstückauflage aufgelegten, zu zentrierenden Werkstücks vorgesehen. Diese ermöglicht einen Abgleich zwischen einem vorzugebenden Sollwert und einem nach oder während eines Zentriervorgangs erreichten Istwert.

In vorteilhafter Weise ist die Erfassungseinrichtung mit der Steuerungseinrichtung gekoppelt. Auf diese Weise kann ein Regelkreis geschaffen werden, der eine automatisierte, geregelte Zentrierung eines Werkstücks ermöglicht.

Es ist möglich, dass die Erfassungseinrichtung eine Position und/oder eine Bewegung des zu zentrierenden Werkstücks erfasst. Beispielsweise erfasst die Erfassungseinrichtung eine Differenz zwischen einem maximalen und einem minimalen Abstand einer um die Rotationsachse rotierenden Umfangslinie des Werkstücks zu der Rotationsachse. Eine solche Erfassungseinrichtung kann beispielsweise in Form eines mechanischen oder optischen Messtasters ausgebildet sein.

Zusätzlich oder alternativ hierzu ist es möglich, dass die mindestens eine Erfassungseinrichtung eine Bewegung und/oder eine Position des Positionierelements erfasst. Die Erfassung einer solchen Bewegung kann auf die Position des Positionierelements längs der Positionierachse bezogen sein. Erfindungsgemäß wird eine Drehung des Positionierelements relativ zu einem Positionierelementhalter erfasst.

Die Erfindung betrifft ferner ein Verfahren zur Zentrierung eines finishend zu bearbeitenden Werkstücks, vorzugsweise unter Verwendung einer vorstehend beschriebenen Werkstückvorrichtung, gemäß den Merkmalen des Oberbegriffs des Patentanspruchs 7.

Der Erfindung liegt die weitere Aufgabe zugrunde, ein vereinfachtes Verfahren zur Zentrierung eines Werkstücks anzugeben.

Diese Aufgabe wird bei einem Verfahren der vorstehend genannten Art erfindungsgemäß durch die kennzeichnenen Merkmale des Anspruchs 7 gelöst.

Im Rahmen des erfindungsgemäßen Verfahrens ist es möglich, dass das Positionierelement so angesteuert wird, dass es in zeitlicher Abfolge zunächst die erste Position und dann die zweite Position einnimmt. Hierbei wird das Positionierelement aus einer beabstandeten Position langsam und kontinuierlich entlang der Positionierachse bewegt, bis es in Kontakt mit der rotierenden Umfangsfläche des zu zentrierenden Werkstücks gelangt. Infolge der Exzentrizität des zu zentrierenden Werkstücks liegt das Positionierelement nach einem initialen Kontakt an der rotierenden Umfangsfläche nicht über einen vollen Umfang der Umfangsfläche an, sondern nur über einen Teilumfang. In diesem Teilumfang bewirkt der Kontakt des Positionierelements an der Umfangsfläche des Werkstücks aber bereits eine Verschiebekraft, welche das Werkstück geringfügig verschiebt. Im Zuge der weiteren Bewegung des Positionierelements wird dann idealerweise ein Zustand erreicht, in welchem das Positionierelement über einen vollen Umfang einer Umfangslinie des zu zentrierenden Werkstücks an dem Werkstück anliegt. Dies hängt von der Rundheit des zu zentrierenden Werkstücks ab.

Während des vorstehend beschriebenen Zentriervorgangs kann eine auf Höhe einer bestimmten Umfangslinie anliegende Rundheit des zu zentrierenden Werkstücks erfasst werden. Eine solche Erfassung erfolgt vorzugsweise wiederholt, sodass ein Vergleich von nacheinander erfassten Rundheitsabweichungen möglich ist. Beispielsweise erfolgt eine Wiederholung der Erfassung einer Rundheitsabweichung über mindestens zwei vollständige Umdrehungen eines Werkstücks. Sobald im Rahmen der Messgenauigkeit der Erfassungseinrichtung eine Identität von nacheinander erfassten Rundheitsabweichungen festgestellt werden kann, ist ein Werkstück optimal zentriert. Die dann noch festgestellte Rundheitsabweichung beruht auf der von einer ideal runden abweichenden Geometrie des zentrierten Werkstücks.

Erfindungsgemäß ist ein drehbares Positionierelement vorgesehen, dessen Drehung relativ zu dem Positionierelementhalter erfasst wird. Ausgehend von einer zu dem Werkstück beabstandeten Lage und während einer Zuführung des Positionierelements in Richtung auf eine zu kontaktierende Werkstückoberfläche gelangt das Positionierelement zunächst nur über einen Teilumfang der rotierenden Umfangsfläche des Werkstücks in Kontakt mit dieser Werkstückoberfläche. Die rotierende Werkstückoberfläche treibt - über diesen Teilumfang hinweg - das Positionierelement durch Reibschluss an dessen Oberfläche in Drehrichtung an. Eine solche Drehung (welche bezogen auf eine vollständige Umdrehung des rotierenden Werkstücks nur in zunächst kürzeren und dann mit zunehmender Zentrierung des Werkstücks in immer längeren Intervallen stattfindet) wird mittels einer Erfassungseinrichtung erfasst. Bei weiterer Zustellung des Positionierelements in Richtung auf die Rotationsachse verschiebt das Positionierelement das Werkstück so, dass das Positionierelement schließlich über einen vollen Umfang einer Drehung des Werkstücks an der rotierenden Umfangsfläche anliegt. Eine solche kontinuierliche Anlage geht mit einer kontinuierlichen Drehung des Positionierelements einher, sodass aufeinanderfolgende Abfragen bezüglich des Drehzustands des Positionierelements identisch sind und ab diesem Zeitpunkt eine Bewegung des Positionierelements gestoppt wird.

Im Rahmen des erfindungsgemäßen Verfahrens ist es auch möglich, dass das Positionierelement so angesteuert wird, dass es in zeitlicher Abfolge zunächst die zweite Position und dann die erste Position einnimmt. Bei diesem Verfahren liegt das Positionierelement zu Beginn des Zentriervorgangs bereits an dem zu zentrierenden Werkstück an. Das Positionierelement wird dann allmählich in eine zu dem Werkstück beabstandete Position verschoben. Während dieses Vorgangs verschiebt sich das Werkstück der jeweiligen Exzentrizität entsprechend zunächst um ein größeres Maß und dann, je mehr ein zentrischer Zustand erreicht ist, nur noch geringfügig, bis hin zu einem Zustand, in dem sich das Werkstück nicht mehr verschiebt. Dieser Zustand ist der Übergangszustand, in welchem das Positionierelement pro Umdrehung des Werkstücks noch mit einem kleinstmöglichen Teilumfang in Berührkontakt mit dem Werkstück steht oder das Werkstück gerade nicht mehr berührt.

Weitere Merkmale und Vorteile der Erfindung sind Gegenstand der nachfolgenden Beschreibung und der zeichnerischen Darstellung bevorzugter Ausführungsbeispiele.

In den Zeichnungen zeigen:
- Fig. 1: eine perspektivische Ansicht einer Ausführungsform einer Werkstückzentriervorrichtung mit einem Werkstück in einem nicht zentrierten Zustand;
- Fig. 2: eine Seitenansicht der Anordnung gemäß Fig. 1;
- Fig. 3: eine Draufsicht der Anordnung gemäß Fig. 1; und
- Fig. 4: eine der Fig. 1 entsprechende Ansicht in einem zentrierten Zustand des Werkstücks;
- Fig. 5: ein erster beispielhafter Weg-Zeit-Verlauf eines Positionierelements der Werkstückzentriervorrichtung; und

- Fig. 6: ein weiterer beispielhafter Weg-Zeit-Verlauf eines Positionierelements der Werkstückzentriervorrichtung.

Eine Ausführungsform einer Werkstückzentriervorrichtung ist in der Zeichnung insgesamt mit dem Bezugszeichen 10 bezeichnet. Diese umfasst eine Halteeinrichtung 12 in Form einer magnetischen Spanneinrichtung 14, welche ein Auflageelement 16 mit magnetischen Haltekräften beaufschlagt. Diese magnetischen Kräfte wirken über eine Werkstückauflagefläche 18 auf ein zu zentrierendes und anschließend finishend zu bearbeitendes Werkstück 20, das somit reibschlüssig an der Halteeinrichtung 12 fixiert ist.

Bei dem Werkstück 20 handelt es sich beispielsweise um einen Innenring eines Wälzlagers. Die finishend zu bearbeitende Umfangsfläche des Innenrings weist nach radial außen.

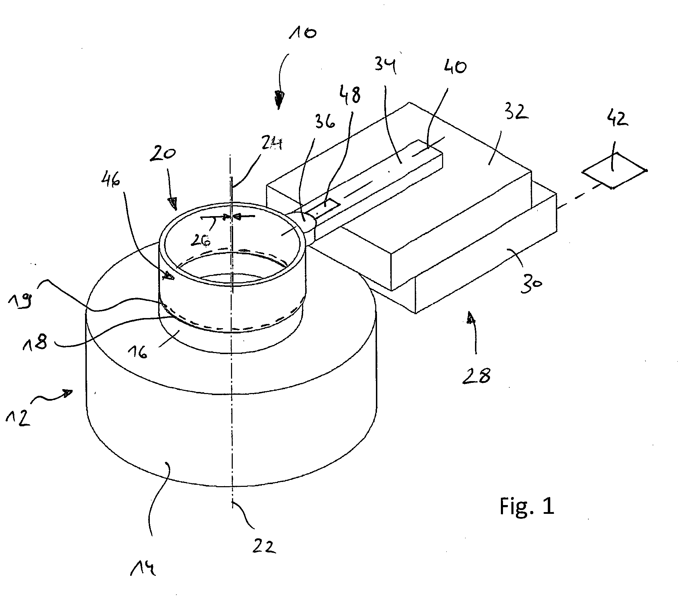

Das Werkstück 20 liegt mit einer stirnseitigen Werkstückfläche 19, deren Verlauf in Figur 1 mit einer gestrichelten Linie dargestellt ist, auf der Werkstückauflagefläche 18 auf. Die Werkstückauflagefläche 18 ist mittels eines an sich bekannten und daher nicht dargestellten Antriebs um eine Rotationsachse 22 rotierend antreibbar. Hierdurch rotiert auch ein auf der Werkstückauflagefläche 18 aufgelegtes Werkstück 20. Das Werkstück 20 weist eine Werkstückachse 24 auf, welche vor einer Zentrierung des Werkstücks 20 relativ zu der Rotationsachse 22 um ein Maß 26 versetzt ist.

Die Vorrichtung 10 umfasst ferner eine Positioniereinrichtung 28 mit einer Antriebseinrichtung 30 zur Erzeugung einer Linearbewegung eines Trägers 32, beispielsweise eines Schlittens. An dem Träger 32 ist ein Positionierelementhalter 34 zum Halten eines Positionierelements 36 angeordnet.

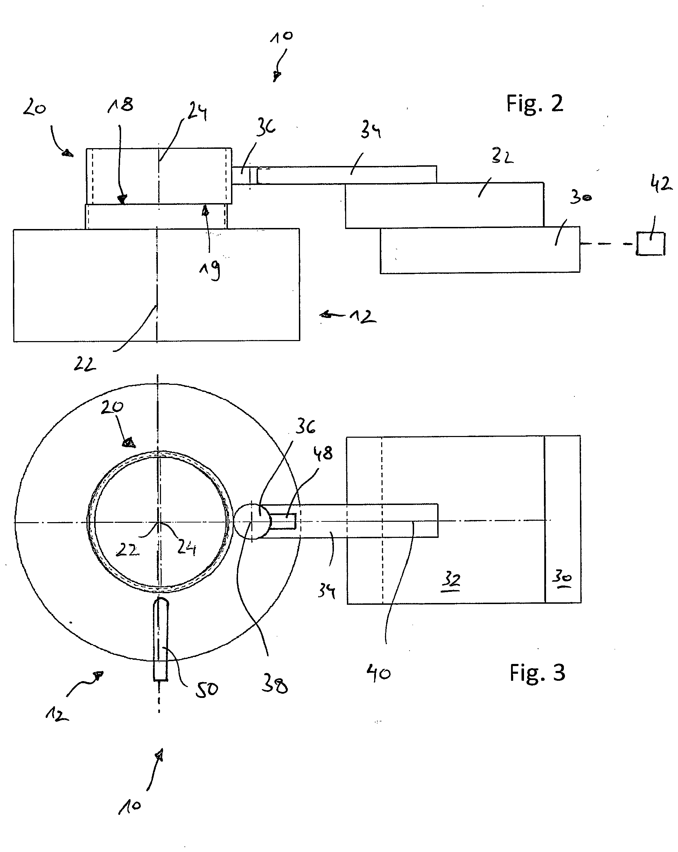

Das Positionierelement 36 ist drehbar an dem Positionierelementhalter 34 angeordnet und um eine Drehachse 38 (vgl. Figur 3) drehbar. Die Drehachse 38 verläuft vorzugsweise parallel zu der Rotationsachse 22.

Der Träger 32 und somit der Positionierelementhalter 34 und das Positionierelement 36 sind längs einer Positionierachse 40 bewegbar. Die Positionierachse 40 verläuft radial zu der Rotationsachse 22. Die Steuerung der Bewegung des Positionierelements 38 längs der Positionierachse 40 erfolgt mittels einer Steuerungseinrichtung 42.

Das Positionierelement 36 weist eine zylindrische Außenfläche 44 auf, welche durch Reibkontakt mit einer Umfangsfläche 46 des zu zentrierenden Werkstücks 20 in Drehbewegung um die Drehachse 38 versetzt werden kann. Zur Erfassung einer solchen Drehbewegung ist erfindungsgemäß eine Erfassungseinrichtung 48 vorgesehen. Die Erfassungseinrichtung 48 ist in vorteilhafter Weise mit der Steuerungseinrichtung 42 gekoppelt. Zusätzlich oder alternativ hierzu ist eine Erfassungseinrichtung 50 in Form eines optischen oder mechanischen Tasters 50 vorgesehen, vgl. Figur 3, welche vorzugsweise mit der Steuerungseinrichtung 42 gekoppelt ist.

Nachfolgend werden verschiedene Verfahren beschrieben, mit welchen die Zentrierung eines Werkstücks 20 unter Verwendung einer vorstehend beschriebenen Werkstückzentriervorrichtung 10 erfolgen kann.

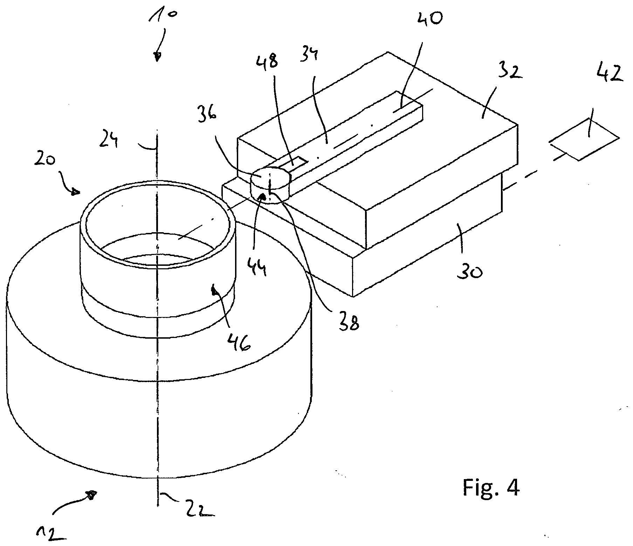

Bei einem ersten, nicht zur Erfindung gehörenden Verfahren wird ausgehend von einem nicht zentrierten Zustand eines auf der Werkstückauflage 18 aufgelegten Werkstücks 20 (vgl. Figur 1) und einem Zustand, in welchem das Positionierelement 36 die Umfangsfläche 46 nicht berührt (in Entsprechung von Figur 4), die Spanneinrichtung 14 so betätigt, dass das Werkstück 20 mit reduzierter Magnetkraft auf der Werkstückauflagefläche 18 gehalten wird. Anschließend werden das Werkstück 20 und die Werkstückauflagefläche 18 in Rotation versetzt. Hierdurch rotiert das Werkstück 20 mit einem exzentrischen Versatz 26 um die Rotationsachse 22. Der Versatz 26 wird mittels der Erfassungseinrichtung 50 mechanisch oder optisch erfasst. Hiervon ausgehend wird das Positionierelement 36 entlang der Positionierachse 40 langsam in Richtung auf die Umfangsfläche 46 bewegt, bis es in Kontakt zunächst mit einem Teilumfang der Umfangsfläche 46 des Werkstücks 20 gelangt. Dieser initiale Kontakt des Positionierelements 36 bewirkt eine Verschiebung des Werkstücks 20 und eine Verkleinerung des Versatzes 26 zwischen der Rotationsachse 22 und der Werkstückachse 24. Diese Verkleinerung wird mittels der Erfassungseinrichtung 50 erfasst, bis bei allmählicher Verlagerung des Positionierelements 36 keine weitere Verbesserung eines Rundlaufs der Umfangsfläche 46 mehr festgestellt werden kann. Dies bedeutet, dass bei einer zweimaligen vollständigen Umdrehung des Werkstücks 20 um die Werkstückachse 24 der mittels der Erfassungseinrichtung 50 erfasste Rundlauf für aufeinanderfolgende Umdrehungen des Werkstücks 20 identisch ist. Sobald dieser Zustand erreicht ist, wird eine weitere Bewegung des Positionierelements 36 in Richtung auf die Rotationsachse 22 gestoppt. Dann sind die Rotationsachse 22 und die Werkstückachse 24 relativ zueinander bestmöglich zentriert (in Entsprechung von Figur 4). Hiervon ausgehend wird das Positionierelement 36 entlang der Positionierachse 40 zurückgefahren. Anschließend kann die Haltekraft der Spanneinrichtung 14 erhöht werden, sodass eine Verschiebung des Werkstücks 20 auf der Werkstückauflagefläche 18 nicht mehr möglich ist.

Anschließend kann die Umfangsfläche 46 mit einem Finishstein oder mit einem Finishband finishend bearbeitet werden. Hierbei rotiert das Werkstück 20 um die Rotationsachse 22. Gleichzeitig wird ein Finishbearbeitungswerkzeug gegen die Umfangsfläche 46 angedrückt und das Werkzeug in einer zu der Rotationsachse parallelen Richtung oszillierend (also hin und her) bewegt. Auf diese Weise entsteht eine für das Finishverfahren charakteristische Kreuzschliffstruktur auf der Umfangsfläche 46.

Eine zweite, erfindungsgemäße Möglichkeit, die vorstehend beschriebene Werkstückzentriervorrichtung 10 zu verwenden, besteht darin, ausgehend aus einem zu der Umfangsfläche 46 beabstandeten Zustand des Positionierelements 36 eine Drehung des Positionierelements 36 um die Drehachse 38 zu überwachen. Auch bei diesem Verfahren wird das zunächst noch nicht zentrierte Werkstück 20 mit reduzierter Haltekraft auf der Spanneinrichtung 14 gehalten und in Rotation um die Rotationsachse 22 versetzt.

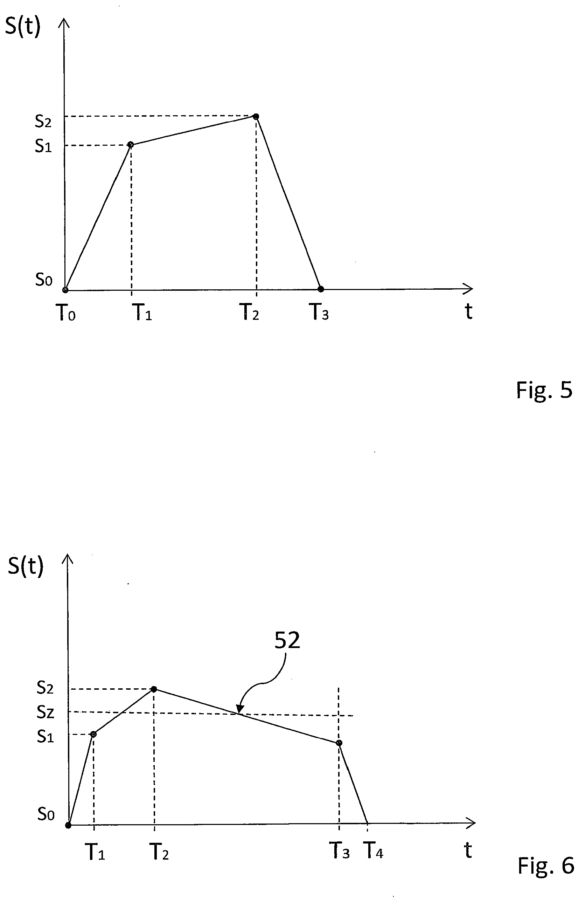

Das Positionierelement 36 ist zunächst zu der Umfangsfläche 46 beabstandet. Dies ist in Figur 5 mit einer Position S0 zu einem Zeitpunkt T0 verdeutlicht. Hiervon ausgehend wird das Positionierelement längs der Positionierachse 40 bis zu einem Zeitpunkt T1 in eine Position S1 verbracht, in der das Positionierelement 36 die Umfangsfläche 46 entlang eines Teilumfangs kontaktiert. Eine solche Bewegung geht mit einer reibschlüssigen Mitnahme der Umfangsfläche 44 des Positionierelements 36 einher. Diese intervallartige Drehmitnahme wird mittels der Erfassungseinrichtung 48 erfasst. Nach Erfassung einer initialen Drehmitnahme wird die Antriebsgeschwindigkeit des Positionierelements 36 längs der Positionierachse 40 reduziert, bis zu einem Zeitpunkt T2 das Positionierelement 36 eine Position S2 einnimmt, in welcher eine dauerhafte Drehmitnahme des Positionierelements 36 an der Umfangsfläche 46 erfolgt. In diesem Zustand ist eine bestmögliche Zentrierung des Werkstücks 20 erreicht. Hiervon ausgehend wird das Positionierelement 36 wieder in seine zurückgefahrene Ausgangslage bewegt, bis es zu einem Zeitpunkt T3 wieder die Position S0 einnimmt und vollständig außer Kontakt mit der Umfangsfläche 46 steht.

Anschließend kann die magnetische Haltekraft erhöht und das Werkstück 20 in vorstehend bereits beschriebener Art und Weise finishend bearbeitet werden.

Bei einem nicht zur Erfindung gehörenden dritten, nachfolgend beschriebenen Verfahren zur Zentrierung eines Werkstücks 20 ist es möglich, auf eine oder beide der Erfassungseinrichtungen 48, 50 verzichten zu können.

Bei einem solchen Verfahren wird ein zu zentrierendes Werkstück 20 in vorstehend beschriebener Art und Weise auf einer Werkstückauflagefläche 18 mit geringeren Haltekräften gehalten, sodass es noch auf der Werkstückauflagefläche 18 verschiebbar ist. Ausgehend von einem entfernten Zustand des Positionierelements 36 wird das Positionierelement 36 entlang der Positionierachse 40 bewegt, bis es zu einem Zeitpunkt T1 und in einer Position S1 in Kontakt mit einem Teilumfang der Umfangsfläche 46 des Werkstücks 20 gelangt. Anschließend wird das Positionierelement 36 über eine ideale Zentrierposition SZ hinausgehend in eine Position S2 verschoben. Anschließend wird das Positionierelement 36 mit vergleichsweise geringerer Bewegungsgeschwindigkeit zurück in die Position S1 verbracht, die zu einem Zeitpunkt T3 erreicht wird. Abschließend kann das Positionierelement 36 zurück in die Ausgangsposition verfahren werden (Position S0 zum Zeitpunkt T4).

Während des Intervalls zwischen dem Zeitpunkt T2 und T3 kann das Positionierelement 36 nur dann eine Druckkraft auf das Werkstück 20 ausüben, solange das Werkstück 36 ausgehend von der Position S2 noch nicht die Position SZ erreicht hat. Erreicht das Positionierelement 36 diese Position SZ, hebt es bei weiterer Bewegung von der dann optimal zentrierten Umfangsfläche 46 des Werkstücks 20 ab. Dieser Zustand ist in Figur 6 mit dem Bezugszeichen 52 angedeutet.

Es ist aber auch möglich, bei dem vorstehend beschriebenen dritten Verfahren eine Erfassungseinrichtung 48 und/oder 50 zu verwenden, um einen Versatz des Werkstücks 20 zu erfassen und um die für den Zentriervorgang benötigte Zeitdauer zu reduzieren. Die Erfassungseinrichtung 48 und/oder 50 signalisiert bzw. signalisieren eine hinreichend genaue Positionierung des Werkstücks 20, wodurch der Positioniervorgang beendet werden kann (wie bereits vorstehend unter Bezugnahme auf das erste und zweite Verfahren beschrieben).

## Patentansprüche

1. Werkstückzentriervorrichtung (10), umfassend eine um eine Rotationsachse (22) drehbar antreibbare Werkstückauflagefläche (18) zur Auflage eines finishend zu bearbeitenden Werkstücks (20), wobei die Werkstückzentriervorrichtung (10) aufweist:
- eine Positioniereinrichtung (28) mit einem Positionierelement (36) zur temporären Anlage an ein auf der Werkstückauflage (18) aufgelegtes, zu zentrierendes Werkstück (20),
- eine Antriebseinrichtung (30) zum Antrieb des Positionierelements (36) längs einer Positionierachse (40),
- mindestens eine Erfassungseinrichtung (48, 50) zur zumindest mittelbaren Erfassung einer Rundheitsabweichung einer Umfangsfläche (46) eines auf der Werkstückauflage (18) aufgelegten, zu zentrierenden Werkstücks (20) und
- eine Steuerungseinrichtung (42) zur Steuerung der Bewegung des Positionierelements (36),
**dadurch gekennzeichnet, dass** das Positionierelement (36) drehbar an einem Positionierelementhalter (34) gelagert ist, wobei die Antriebseinrichtung (30) den Positionierelementhalter (34) antreibt, wobei die mindestens eine Erfassungseinrichtung (48) eine Drehung des Positionierelements (36) relativ zu dem Positionierelementhalter (34) erfasst.

2. Werkstückzentriervorrichtung (10) nach Anspruch 1, **dadurch gekennzeichnet, dass** die Positionierachse (40) bezogen auf die Rotationsachse (22) in radialer Richtung verläuft.

3. Werkstückzentriervorrichtung (10) nach einem der voranstehenden Ansprüche, **gekennzeichnet durch** eine Halteeinrichtung (12) zur Fixierung des Werkstücks (20) auf der Werkstückauflagefläche (18).

4. Werkstückzentriervorrichtung (10) nach Anspruch 3, **dadurch gekennzeichnet, dass** die Halteeinrichtung (12) durch eine magnetische Spanneinrichtung (14) gebildet ist, mittels welcher das Werkstück (20) reibschlüssig auf der Werkstückauflagefläche (18) fixierbar ist.

5. Werkstückzentriervorrichtung (10) nach einem der voranstehenden Ansprüche, **dadurch gekennzeichnet, dass** die Erfassungseinrichtung (48, 50) mit der Steuerungseinrichtung (42) gekoppelt ist.

6. Werkstückzentriervorrichtung (10) nach einem der voranstehenden Ansprüche, **dadurch gekennzeichnet, dass** die Erfassungseinrichtung (50) eine Differenz zwischen einem maximalen und einem minimalen Abstand einer um die Rotationsachse (22) rotierenden Umfangslinie des Werkstücks (20) zu der Rotationsachse (22) erfasst.

7. Verfahren zur Zentrierung eines finishend zu bearbeitenden Werkstücks, vorzugsweise unter Verwendung einer Werkstückvorrichtung (10) nach einem der voranstehenden Ansprüche, wobei ein zu zentrierendes und finishend zu bearbeitendes Werkstück (20) auf eine um eine Rotationsachse (22) drehbar antreibbare Werkstückauflagefläche (18) aufgelegt wird, wobei das Werkstück (20) in Drehrichtung angetrieben wird und währenddessen die Bewegung eines Positionierelements (36) entlang einer Positionierachse (40) derart gesteuert wird, dass das Positionierelement (36) in einer ersten Position zu der rotierenden Umfangsfläche (46) des Werkstücks (20) beabstandet ist und in einer zweiten Position die rotierende Umfangsfläche (46) des zu zentrierenden Werkstücks (20) kontaktiert, **dadurch gekennzeichnet, dass** eine Drehung des Positionierelements (36) relativ zu dem Positionierelementhalter (34) erfasst wird.

8. Verfahren nach Anspruch 10, **dadurch gekennzeichnet, dass** das Positionierelement (36) so angesteuert wird, dass es in zeitlicher Abfolge zunächst die erste Position und dann die zweite Position einnimmt.

9. Verfahren nach Anspruch 10, **dadurch gekennzeichnet, dass** das Positionierelement (36) so angesteuert wird, dass es in zeitlicher Abfolge zunächst die zweite Position und dann die erste Position einnimmt.

10. Verfahren nach einem der Ansprüche 10 bis 12, **dadurch gekennzeichnet, dass** während der Zentrierung des Werkstücks (20) eine Rundheitsabweichung der Umfangsfläche (46) des Werkstücks (20) zumindest mittelbar erfasst wird.

11. Verfahren nach einem der Ansprüche 7 bis 10, **dadurch gekennzeichnet, dass** die Erfassung mehrfach durchgeführt und eine Bewegung des Positionierelements (36) entlang der Positionierachse (40) gestoppt wird, wenn nacheinander erfasste Rundheitsabweichungen identisch sind.

12. Verfahren nach einem der Ansprüche 7 bis 11, **dadurch gekennzeichnet, dass** eine Haltekraft zum Halten des Werkstücks (20) auf der Werkstückauflagefläche (18) veränderbar ist und dass während der Zentrierung des Werkstücks (20) eine niedrigere Haltekraft eingestellt wird als eine Haltekraft, die während einer nachfolgenden Finishbearbeitung des Werkstücks (20) eingestellt wird.

## Claims

1. Workpiece centring device (10), comprising a workpiece support surface (18) for the support of a workpiece (20) to be finish-machined, wherein the workpiece support surface (18) is rotatably drivable around an axis of rotation (22), wherein the workpiece centring device (10) comprises:
- a positioning device (28) having a positioning element (36) for a temporary contact against a workpiece (20) which is placed on the workpiece support surface (18) and which is to be centered,
- a driving device (30) for driving the positioning element (36) along a positioning axis (40),
- at least one detection device (48, 50) for at least indirect detection of a roundness deviation of a circumferential surface (46) of a workpiece (20) which is placed on the workpiece support surface (18) and which is to be centered, and
- a control device (42) for controlling the movement of the positioning element (36),
**characterized in that** the positioning element (36) is rotatably mounted on a positioning element holder (34), wherein the driving device (30) drives the positioning element holder (34), wherein the at least one detection device (48) is detecting a rotation of the positioning element (36) relative to the positioning element holder (34) .

2. Workpiece centring device (10) according to claim 1, **characterized in that** the positioning axis (40) extends in a radial direction relative to the axis of rotation (22) .

3. Workpiece centring device (10) according to one of the preceding claims, **characterized by** a holding device (12) for fixing the workpiece (20) on the workpiece support surface (18).

4. Workpiece centring device (10) according to claim 3, **characterized in that** the holding device (12) is formed by a magnetic clamping device (14), through which the workpiece (20) can be fixed on the workpiece support surface (18) with frictional engagement.

5. Workpiece centring device (10) according to one of the preceding claims, **characterized in that** the detection device (48, 50) is coupled to the control device (42).

6. Workpiece centring device (10) according to one of the preceding claims, **characterized in that** the detection device (50) detects a difference between a maximum and a minimum distance to the axis of rotation (22) of a rotating circumferential line of the workpiece (20) rotating around the axis of rotation (22).

7. Method to center a workpiece to be finished-machined, preferably using a workpiece device (10) according to one of the preceding claims, wherein a workpiece (20) which is to be centred and which is to be finished is placed on a workpiece support surface (18) which is rotatably drivable around an axis of rotation (22), wherein the workpiece (20) is driven in a direction of rotation and, meanwhile, the movement of a positioning element (36) along a positioning axis (40) is controlled in such a way that - in a first position - the positioning element (36) is spaced apart from the rotating circumferential surface (46) of the workpiece (20) and - in a second position - contacts the rotating circumferential surface (46) of the workpiece (20) to be centered, **characterized in that** a rotation of the positioning element (36) relative to the positioning element holder (34) is detected.

8. Method according to claim 10, **characterized in that** the positioning element (36) is controlled in such a way that in time sequence it at first assumes the first position and then the second position.

9. Method according to claim 10, **characterized in that** the positioning element (36) is controlled in such a way that in time sequence it at first assumes the second position and then the first position.

10. Method according to one of the claims 10 to 12, **characterized in that** during the centring of the workpiece (20) a roundness deviation of the circumferential surface (46) of the workpiece (20) is at least indirectly detected.

11. Method according to one of the claims 7 to 10, **characterized in that** the detection is carried out several times and a movement of the positioning element (36) along the positioning axis (40) is stopped if successively detected roundness deviations are identical.

12. Method according to one of claims 7 to 11, **characterized in that** a holding force for holding the workpiece (20) on the workpiece support surface (18) is modifiable, and **in that** a lower holding force is set during centring of the workpiece (20) than a holding force set during subsequent finishing of the workpiece (20).

## Revendications

1. Dispositif de centrage de pièce (10) comprenant une surface d'appui de pièce (18) qui peut être entraînée en rotation autour d'un axe de rotation (22) et est destinée à supporter une pièce (20) à usiner par finition, ledit dispositif de centrage de pièce (10) présentant:
- un dispositif de positionnement (28) ayant un élément de positionnement (36) pour venir s'appuyer temporairement contre une pièce (20) à centrer qui est posée sur l'appui de pièce (18),
- un dispositif d'entraînement (30) destiné à entraîner l'élément de positionnement (36) selon un axe de positionnement (40),
- au moins un dispositif de détection (48, 50) destiné à détecter au moins de manière indirecte un écart de rondeur d'une surface circonférentielle (46) d'une pièce (20) à centrer qui est posée sur l'appui de pièce (18), et
- un dispositif de commande (42) destiné à commander le déplacement de l'élément de positionnement (36),
**caractérisé par le fait que** l'élément de positionnement (36) est logé à rotation sur un support d'élément de positionnement (34), dans lequel le dispositif d'entraînement (30) entraîne le support d'élément de positionnement (34), dans lequel ledit au moins un dispositif de détection (48) détecte une rotation de l'élément de positionnement (36) par rapport au support d'élément de positionnement (34).

2. Dispositif de centrage de pièce (10) selon la revendication 1, **caractérisé par le fait que** l'axe de positionnement (40) s'étend dans la direction radiale par rapport à l'axe de rotation (22).

3. Dispositif de centrage de pièce (10) selon l'une quelconque des revendications précédentes, **caractérisé par** un dispositif de maintien (12) pour fixer la pièce (20) sur la surface d'appui de pièce (18).

4. Dispositif de centrage de pièce (10) selon la revendication 3, **caractérisé par le fait que** le dispositif de maintien (12) est formé par un dispositif de serrage magnétique (14) au moyen duquel la pièce (20) peut être fixée par friction sur la surface d'appui de pièce (18).

5. Dispositif de centrage de pièce (10) selon l'une quelconque des revendications précédentes, **caractérisé par le fait que** le dispositif de détection (48, 50) est couplé au dispositif de commande (42).

6. Dispositif de centrage de pièce (10) selon l'une quelconque des revendications précédentes, **caractérisé par le fait que** le dispositif de détection (50) détecte une différence entre une distance maximale et une distance minimale d'une ligne circonférentielle de la pièce (20), tournant autour de l'axe de rotation (22), par rapport à l'axe de rotation (22).

7. Procédé de centrage d'une pièce à usiner par finition, de préférence en utilisant un dispositif de pièce (10) selon l'une quelconque des revendications précédentes, dans lequel une pièce (20) à centrer et à usiner par finition est posée sur une surface d'appui de pièce (18) apte à être entraînée en rotation autour d'un axe de rotation (22), dans lequel la pièce (20) est entraînée dans la direction de rotation et, pendant ceci, le déplacement d'un élément de positionnement (36) le long d'un axe de positionnement (40) est commandé de telle sorte que, dans une première position, l'élément de positionnement (36) est espacée par rapport à la surface circonférentielle (46) rotative de la pièce (20) et que, dans une deuxième position, il entre en contact avec la surface circonférentielle (46) rotative de la pièce (20) à centrer, **caractérisé par le fait qu'**une rotation de l'élément de positionnement (36) par rapport au support d'élément de positionnement (34) est détectée.

8. Procédé selon la revendication 10, **caractérisé par le fait que** l'élément de positionnement (36) est commandé de manière à ce qu'il prenne d'abord la première position et puis la deuxième position dans l'ordre chronologique.

9. Procédé selon la revendication 10, **caractérisé par le fait que** l'élément de positionnement (36) est commandé de manière à ce qu'il prenne d'abord la deuxième position et puis la première position dans l'ordre chronologique.

10. Procédé selon l'une quelconque des revendications 10 à 12, **caractérisé par le fait qu'**un écart de rondeur de la surface circonférentielle (46) de la pièce (20) est détecté au moins indirectement lors du centrage de la pièce (20).

11. Procédé selon l'une quelconque des revendications 7 à 10, **caractérisé par le fait que** la détection est effectuée plusieurs fois et qu'un déplacement de l'élément de positionnement (36) le long de l'axe de positionnement (40) est arrêté si des écarts de rondeur détectés successivement sont identiques.

12. Procédé selon l'une quelconque des revendications 7 à 11, **caractérisé par le fait qu'**une force de maintien pour maintenir la pièce (20) sur la surface d'appui de pièce (18) peut être modifiée et que, lors du centrage de la pièce (20), on règle une force de maintien inférieure à une force de maintien qui est réglée lors d'un usinage de finition ultérieur de la pièce (20).
